(19) Europäisches Patentamt
European Patent Office
Office européen des brevets

(11) **EP 4 383 295 A1**

(12) **EUROPEAN PATENT APPLICATION**
published in accordance with Art. 153(4) EPC

(43) Date of publication:
**12.06.2024 Bulletin 2024/24**

(21) Application number: **22872994.3**

(22) Date of filing: **22.09.2022**

(51) International Patent Classification (IPC):
*H01G 9/035* (2006.01)     *H01G 9/028* (2006.01)
*H01G 9/10* (2006.01)      *H01G 9/145* (2006.01)
*H01G 9/15* (2006.01)

(52) Cooperative Patent Classification (CPC):
**H01G 9/028; H01G 9/035; H01G 9/10; H01G 9/145; H01G 9/15**

(86) International application number:
**PCT/JP2022/035412**

(87) International publication number:
**WO 2023/048243 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 JP 2021157202**
             **17.03.2022 JP 2022042967**

(71) Applicant: **Nippon Chemi-Con Corporation**
**Tokyo 141-8605 (JP)**

(72) Inventors:
• **SATO, Kenta**
  **Tokyo 141-8605 (JP)**
• **TAKAHASHI, Hideaki**
  **Tokyo 141-8605 (JP)**
• **MAEDA, Tetsuo**
  **Tokyo 141-8605 (JP)**

(74) Representative: **AWA Sweden AB**
**Box 5117**
**200 71 Malmö (SE)**

(54) **ELECTROLYTIC CAPACITOR**

(57)     An electrolytic capacitor in which the transpiration of the electrolytic solution is suppressed even under the high-temperature environment is provided. The electrolytic capacitor comprising: a capacitor element having anode foil, cathode foil, electrolytic solution, and a solid electrolyte layer; a casing housing the capacitor element therein; and a sealing body sealing the casing, in which the sealing body includes butyl rubber, and the electrolytic solution includes glycerin, diglycerin, or both of 60 wt% or more relative to the solvent in the electrolytic solution.

**EP 4 383 295 A1**

**Description**

FIELD OF INVENTION

The present disclosure relates to an electrolytic capacitor that gains the capacitance by the dielectric polarization of dielectric oxide film, and stores and discharges electric charge.

BACKGROUND

In electrolytic capacitors utilizing valve action metal such as tantalum and aluminum, by making the valve action metal as an anode-side electrode into shapes of a sintered body or etching foil, and the like, to enlarge a surface of dielectric, the electrolytic capacitors can be in a small size and have a large capacity. In this type of the electrolytic capacitor, voids are filled with an electrolytic solution to bring the dielectric oxide film of the anode electrode into close contact with the counter electrode.

The electrolytic solution directly contacts with the dielectric oxide film and acts as a true cathode, and also has a repairing action on the dielectric film. However, evaporation and volatilization occur, where the electrolytic solution is released outside the electrolytic capacitor over time. Therefore, the capacitance of the electrolytic capacitor decreases over time toward dry-up, and finally ends its life.

A capacitor element is housed in an outer casing with a bottom, and an opening of the outer casing is sealed with a sealing body to seal the electrolytic solution impregnated in the capacitor element and suppress the evaporation and volatilization of the electrolytic solution to extend its lifetime. However, the electrolytic solution is not completely confined within the casing, but permeates the sealing body and gradually volatilizes to the outside of the electrolytic capacitor.

Therefore, it is suggested to use a solvent with high boiling point as the electrolytic solution (for example, refer the patent document 1). The solvent with high boiling point may be $\gamma$-butyrolactone with the boiling point of 230 °C, butanediol with the boiling point of 285 °C, ethylene glycol with the boiling point of 198 °C, and polyethylene glycol with the boiling point of 244 °C.

PRIOR ART DOCUMENT

PATENT DOCUMENT

Patent Document 1: JP 2013-094462

SUMMARY OF INVENTION

PROBLEMS TO BE SOLVED BY INVENTION

In recent years, excellent performance under high-temperature environment of for example 170 °C is required for the electrolytic capacitor for in-vehicle application. In detail, long lifetime is required for the electrolytic capacitor to maintain a certain level of the capacitance for a long time even under the high-temperature environment. Meanwhile, the inventors have observed that the transpiration of the electrolytic solution cannot be suppressed and the electrolytic capacitor may easily dries up under the high-temperature environment even when the electrolytic solution is formed by the solvent with the boiling point as high as 180 °C.

The present disclosure has been proposed to solve the above problems, and an objective is to provide an electrolytic capacitor in which the transpiration of the electrolytic solution is suppressed even under the high-temperature environment.

MEANS TO SOLVE THE PROBLEM

To address the above problems, an electrolytic capacitor of the present embodiment includes: a capacitor element comprising anode foil, cathode foil, electrolytic solution, and a solid electrolyte layer; a casing housing the capacitor element therein; and a sealing body sealing the casing, in which the sealing body includes butyl rubber, and the electrolytic solution includes glycerin, diglycerin, or both of 60 wt% or more relative to the solvent in the electrolytic solution.

By this, the transpiration of the electrolytic solution is suppressed and the certain level of the capacitance is maintained for a long time even when the electrolytic capacitor is exposed under the high-temperature environment of 170 °C.

Here, the sealing body may be ethylene propylene rubber. The ethylene propylene rubber is more heat resistant than the butyl rubber so that it is difficult to crack under the high-temperature environment, but the electrolytic solution is more permeable to ethylene propylene rubber. Therefore, the transpiration of the electrolytic solution under the high-temperature environment cannot be suppressed even when the solvent with high boiling point, including glycerin and diglycerin, is used. In contrast, butyl rubber is less permeable to the electrolytic solution than ethylene propylene rubber. However, even when the sealing body include butyl rubber, if the solvent other than glycerin and diglycerin, including with having the glycerin skeleton as same as the glycerin and diglycerin, the sealing body cracks under the high temperature environment and the transpiration of the electrolytic solution cannot be suppressed.

Thus, the inventors have found that the combination and composition ratio of the sealing body and the electrolytic solution have greater effect to the transpiration of the electrolytic solution than high boiling point of the solvent in the electrolytic solution and the permeability and cracking of the sealing body, and achieved the present disclosure.

The sealing body may further include ethylene propylene rubber. The transpiration suppression effect of the electrolytic solution is expressed even when the sealing body includes ethylene propylene rubber as long as the sealing body includes butyl rubber. The weight ratio of the butyl rubber (A) and the ethylene propylene rubber (B) may be expressed by the below Formula 1. That is, the sealing body may include the butyl rubber of 10 wt% or more relative to a total amount of elastomer.

$$(\text{Formula } 1)$$

$$A/(A+B) \times 100 \geqq 10$$

The electrolytic solution may include ethylene glycol, polyethylene glycol, or both. When ethylene glycol or polyethylene glycol are used as the solvent of the electrolytic solution in addition to glycerin and diglycerin, the electrolytic solution expresses the electrolytic solution transpiration suppression effect of the same level as when $\gamma$-butyrolactone or sulfolane is used as the solvent of the electrolytic solution by glycerin or diglycerin of low level, and the transpiration suppression effect of the electrolytic solution can be improved and the concentration of glycerin or diglycerin can be lowered. In particular, when ethylene glycol is used together, the electrolytic solution transpiration suppression effect of the same level can be achieved by glycerin and diglycerin of lower concentration.

Note that the capacitor element may include a solid electrolyte layer to reduce the resistance component of the electrolytic capacitor even though glycerin and diglycerin has high viscosity and specific resistance.

The solid electrolyte layer may include a liquid compound with a boiling point of 150 °C or more and a hydroxyl group.

The liquid compound may be ethylene glycol.

The electrolytic solution may include one selected from a group of 1,6-decanedicarboxylic acid, azelaic acid, adipic acid, phthalic acid, and benzoic acid.

The electrolytic solution may include ammonia.

EFFECT OF INVENTION

According to the present disclosure, the transpiration of the electrolytic solution is suppressed and the certain level of the capacitance is maintained for a long time under high-temperature environment of 170 °C.

EMBODIMENTS

Hereinafter, the electrolytic capacitor according to embodiments of the present disclosure will be described. Note that the present disclosure is not limited to the following embodiments.

Electrolytic capacitors are passive elements that store and discharge electric charges according to capacitance. The electrolytic capacitor has a capacitor element, a casing, and a sealing body. The casing is an exterior that houses the capacitor element. The sealing body is attached to an opening of the casing by a crimping process and seals the opening of the casing. The capacitor element includes anode foil, a cathode foil, a separator, and an electrolyte. The anode foil and the cathode foil face each other via the separator. Dielectric oxide film is formed on a surface of the anode foil. The electrolytic capacitor includes electrolytic solution and a solid electrolyte layer as the electrolyte. The solid electrolyte layer is interposed between the anode foil and the cathode foil, and is in close contact with the dielectric oxide film. The electrolytic solution is filled into voids of the capacitor element.

In this electrolytic capacitor, the sealing body is an elastic body mainly formed of elastomer, or a laminated body in which synthetic resin plates or metal plates are laminated on the elastic body. As the elastomer, the sealing body includes isobutylene isoprene rubber that is also referred to as butyl rubber. Furthermore, the electrolytic solution may be ion-dissociable salt which dissociates into anion components and cation components, and a solvent of the electrolytic solution is glycerin, diglycerin, or both.

When the sealing body includes butyl rubber and the solvent of the electrolytic solution is glycerin, diglycerin, or both, it becomes difficult for the electrolytic solution to transpire from the sealing body to the outside and for the sealing body to crack, even when the electrolytic capacitor is exposed under the high-temperature environment of 170 °C for a long time. Therefore, the electrolytic solution remains in the electrolytic capacitor for a long time and high capacitance is maintained for a long time, so that the electrolytic capacitor with long lifetime can be achieved.

However, when polyglycerin that exceeds a dimer, the sealing body will crack when exposed under the high-temperature for a long time even if polyglycerin is combined with the sealing body including butyl rubber. Furthermore, even when glycerin, diglycerin, or both is used as the solvent of the electrolytic solution, it needs to be 60 wt% or more of the total solvent. If it is less than 60 wt%, even when the sealing body includes butyl rubber and the solvent of the electrolytic solution is glycerin, diglycerin, or both, the sealing body will crack when exposed under the high-temperature environment of 170 °C for a long time.

If other types of the solvent other than glycerin, diglycerin, or both are to be added, ethylene glycol, polyethylene glycol, or both is preferable. For example, the transpiration amount of the electrolytic solution from the sealing body including butyl rubber can be reduced in comparison with when a solvent such as $\gamma$-butyrolactone and sulfolane that is other than ethylene glycol and polyethylene glycol is added as the solvent, such that the lifetime of the electrolytic capacitor is extended. In particular, in the case of adding the solvent other than glycerin, diglycerin, or both, it is preferable to add ethylene glycol and polyethylene glycol to reduce the viscosity of the entire electrolytic solution and reduce the specific resistance. The addition amount of ethylene glycol, polyethylene glycol, or both is not limited, and for example, they may be 40 wt% or less relative to the total amount of the solvent or may be 20 wt% or less relative to the total amount of the solvent.

Here, the solid electrolyte layer includes conductive polymers, acts as a true cathode of the electrolytic capacitor together with the electrolytic solution, reduces the specific resistance due to the high viscosity of glycerin and diglycerin, and reduced the internal resistance of the electrolytic capacitor. Moreover, although the conductivity of the solid electrolyte layer decreases and the canceling effect against the specific resistance of glycerin and diglycerin decreases when dedoping occurs in the conductive polymer, the dedoping reaction is suppressed because ion diffusivity of glycerin and diglycerin is low. Therefore, in this electrolytic capacitor, the electrolytic solution and the solid electrolyte layer are used together.

The electrolytic solution may include one type selected from a group of 1,6-decanedicarboxylic acid, azelaic acid, adipic acid, phthalic acid, and benzoic acid. If glycerin, diglycerin, or both, and one type selected from a group of 1,6-decanedicarboxylic acid, azelaic acid, adipic acid, phthalic acid, and benzoic acid are included in the electrolytic solution, the expansion of the casing after reflow is largely suppressed.

Furthermore, the electrolytic solution may include ammonia. If glycerin, diglycerin, or both, and ammonia are included in the electrolytic solution, dedoping of the conductive polymer is further suppressed and an increase in the equivalent series resistance (ESR) of the electrolytic capacitor is suppressed. Therefore, it becomes easy to make the amount of glycerin, diglycerin, or both to be 60 wt% or more relative to the total amount of the solvent in the electrolytic solution.

In the above electrolytic capacitor, butyl rubber included in the sealing body is made by vulcanization. The vulcanization may be resin vulcanization, sulfur vulcanization, and quinoid vulcanization. Vulcanizing agent may be alkyl phenol formaldehyde resin, quinoid, and sulfur, etc. Furthermore, cross-linking accelerator may be zinc oxide, magnesium oxide, lead peroxide, dibenzothiazyl, disulfides, 1,2-polybutadiene, triallyl cyanurate methacrylic acid and acrylic acid metal salt, and ester stearic acid N,N'-metaphenylenedimaleinoside, etc.

If butyl rubber is used for the sealing body and the solvent of the electrolytic solution includes glycerin, diglycerin, or both, ethylene propylene rubber may be included as the other elastomer, and the transpiration suppression effect of the electrolytic solution is achieved. However, it is preferable to add 10 wt% of butyl rubber relative to the total elastomer. It is further preferable to add 90 wt% of butyl rubber relative to the total elastomer. If the butyl rubber is included in the above rate, the electrolytic solution remains in the electrolytic capacitor for a long time.

That is, the weight ratio of butyl rubber (A) and ethylene propylene rubber (B) is $A/(A+B) \times 100 \geqq 10$ as the above formula 1. In other word, the weight ratio of butyl rubber (A) and ethylene propylene rubber (B) is A:B = 10:90 or more butyl rubber may be included than said weight ratio.

When using butyl rubber and ethylene propylene rubber together, it is preferable to make the elastomer by resin vulcanization such as alkyl phenol formaldehyde resin. When using butyl rubber and ethylene propylene rubber together, the resin vulcanization is most effective in the transpiration suppression effect of the electrolytic solution. By mixing butyl rubber and ethylene propylene rubber and then adding the resin vulcanizing agent to the mixture, butyl rubber and ethylene propylene rubber are cross-linked by the resin vulcanization.

The elastic body including butyl rubber may include carbon and inorganic filler other than the butyl rubber. When carbon and inorganic filler are added, butyl rubber less likely cleaves and softening thereof is suppressed. The inorganic filler may be talc, mica, silica, kaolin, titania, alumina, and mixtures thereof, and talc and mica with flatten shape are preferred. The inorganic filler with flattened shape facilitates cross-linking and is suitable for adjusting the cross-linking density.

The casing sealed by the sealing body is made of aluminum, aluminum alloy containing aluminum or manganese, or stainless steel, and for example, is a cylinder with a bottom and an opening at the other end. The sealing body is collapsed by bending the opening of the casing inward and tightly contacts with an inner surface of the casing.

In the capacitor element housed inside the casing, the anode foil and the cathode foil are long foil bodies formed of valve action metal. The valve action metal is aluminum, tantalum, niobium, niobium oxide, titanium, hafnium, zirconium, zinc, tungsten, bismuth, and antimony, etc. The purity of the anode foil is desirably 99.9% or more, and the purity of the cathode foil is desirably about 99% or more, however impurities such as silicon, iron, copper, magnesium, and zinc may be included.

The surface of the anode foil is enlarged as a sintered body obtained by sintering powder of valve action metal or etching foil obtained by etching stretched foil. The enlarged surface structure is formed by tunnel-shaped etching pits, spongy pits, or air gaps between dense powder. Typically, the enlarged surface structure is formed by direct current etching or alternating current etching in which direct current or alternating current is applied in acidic aqueous solution containing halogen ions such as hydrochloric acid, or is formed by depositing or sintering metal particles, and the like on a core. The cathode foil may also have the enlarged surface structure by deposition, sintering, or etching.

Typically, the dielectric oxide film is oxide film formed on the surface layer of the anode foil, and when the anode foil is made of aluminum, it is aluminum oxide obtained by oxidizing a porous structural region. This dielectric oxide film is formed by the chemical conversion treatment in which voltage is applied in aqueous solution of adipic acid, boric acid or phosphoric acid, and the like. Furthermore, thin dielectric oxide film (about 1 to 10 V) may be formed on the surface layer of the cathode foil by chemical conversion treatment, if necessary. In addition, the cathode foil may be formed by vapor deposition of a layer consisting of metal nitrides, metal carbides, or metal carbonitrides, or may be produced by using material containing carbon on a surface thereof.

The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin, polyvinyl alcohol resin and the like, and the resin may be used in single or in combination.

The solid electrolyte layer is formed by immersing the above structure having the anode foil, the cathode foil and the separator in conductive polymer dispersion and drying said structure. The anode foil, the cathode foil, and the separator may be immersed in the dispersion separately before being assembled, or the dispersion may be applied dropwise or may be applied by spraying.

The conductive polymer is a self-doped conjugated polymer doped by dopant molecules in the molecules or a doped conjugated polymer doped by external dopant molecules. The conjugated polymer is obtained by chemical oxidative polymerization or electrolytic oxidative polymerization of monomers with a π-conjugated double bond or derivatives thereof. Known polymers may be used for the conjugated polymer without limitation. For example, the conjugated polymer may be polypyrrole, polythiophene, polyfuran, polyaniline, polyacetylene, polyphenylene, polyphenylenevinylene, polyacene, and polythiophenevinylene, etc. These conjugated polymers may be used in single or or in combination of two or more, and may further be a copolymer of two or more kinds of monomers.

Among the above-described conjugated polymers, conjugated polymers formed by polymerizing thiophene or derivatives thereof is preferable, and conjugated polymers in which 3,4-ethylenedioxythiophene (that is, 2,3-dihydrothieno[3,4-b][1,4]dioxin), 3-alkylthiophene, 3-alkoxythiophene, 3-alkyl-4-alkoxythiophene, 3,4-alkylthiophene, 3,4-alkoxythiophene, or derivatives thereof are polymerized are preferable. The thiophene derivatives may preferably be a compound selected from thiophene with substituents at the 3-position and 4-position, and the 3-position and 4-position substituents of the thiophene ring may form a ring together with the 3-position and 4-position carbon. The number of carbon of alkyl and alkoxy groups is suitably from 1 to 16, and in particular, a polymer of 3,4-ethylenedioxythiophene called EDOT, that is, poly(3,4-ethylenedioxythiophene) called PEDOT is particularly preferable. Furthermore, an alkylated ethylenedioxythiophene in which an alkyl group is added to 3,4-ethylenedioxythiophene may be used, and for example, a methylated ethylenedioxythiophene (that is, 2-methyl-2,3-dihydro-thieno[3,4-b][1,4] dioxin), ethylated ethylenedioxythiophene (that is, 2-ethyl-2,3-dihydro-thieno[3,4-b] [1,4] dioxine), and the like may be used.

As the dopant, known dopants may be used without limitation. For example, the dopant may be inorganic acid such as boric acid, nitric acid, and phosphoric acid, and organic acid such as acetic acid, oxalic acid, citric acid, ascot acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid. Polyanions may be polyvinyl sulfonic acid, polystyrene sulfonic acid, polyallyl sulfonic acid, polyacrylic sulfonic acid, polymethacrylic sulfonic acid, poly(2-acrylamide-2-methylpropanesulfonic acid), polyisoprene sulfonic acid, polyacrylic acid, polymethacrylic acid, and polymaleic acid, etc.

The solid electrolyte layer may include a polar solvent with the boiling point of 150 °C or more, in addition to the conductive polymer. The polar solvent may be ethylene glycol, diethylene glycol, triethylene glycol, polyoxyethylene glycol, glycerins such as glycerin and diglycerin, dimethyl sulfoxide, dimethyl formamide, N-methyl-2-pyrrolidone, or combinations of two or more. The carrier mobility of the polar solvent is improved by changing a high-order structure of the conductive polymer and reorienting the crystalline structure of a polymer chain, and the electrical conductivity of the conductive polymer is improved.

Among the polar solvents, liquid compounds with the boiling point of 150 °C or more and with hydroxy group is preferable to further improve the electrical conductivity of the conductive polymer. The liquid compound may preferably be ethylene glycol, diethylene glycol, triethylene glycol, polyoxyethylene glycol, glycerin, and diglycerin.

Furthermore, the compound the boiling point of 150 °C and with hydroxy group may be sorbitol, pentaerythritol, mannitol, xylitol, bolemitol, or a combination of two or more. These compounds improve the chemical property of the dielectric oxide film and withstand voltage.

Anion components of the electrolytic solution may be organic acid, inorganic acid, or composite compounds of organic acid and inorganic acid. The organic acid may be carboxylic acid such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acids, malonic acids, 1,6-decandicarboxylic acid, 1,7-octanedicarboxylic acid, azelaic acid, resolcinic acid, fluorochloric acid, gallic acid, gentisic acid, protocatechuic acid, pyrocatechuic acid, trimellitic acid, and pyromellitic acid, phenols, and sulfonic acid, etc. The inorganic acid may be boric acid, phosphoric acid, phosphorus acid, hypophosphorous acid, carbonic acid, and silicic acid, etc. The composite compound of organic acid and inorganic acid may be borodisalicylic acid, borodioxalic acid, borodiglycolic acid, borodimalonic acid, borodichuccinic acid, borodiadipic acid, borodiazelaic acid, borodibenzoic acid, borodimarainic acid, borodilactic acid, borodiapple acid, borodi tartric acid, borodicitrate acid, borodiphthalic acid, borodi(2-hydroxy) isobutyric acid, borodiresorcinic acid, borodimethylsalicylic acid, borodinaftoeic acid, borodimandelic acid, and borodi(3-hydroxy) propionic acid, etc.

Among the anion components, it is preferable to select one type from a group of 1,6-decanedicarboxylic acid, azelaic acid, adipic acid, phthalic acid, and benzoic acid. When theses anion components are included, the expansion amount of the casing of the electrolytic capacitor can be suppressed, for example, under super-high temperature such as peak temperature 260 °C in the reflow process to implement the electrolytic capacitor.

Cation components of the electrolytic solution may be cation ions produced from ammonium salt, quaternary ammonium salt, quaternarized aminidium salt, amine salt, sodium salt, and potassium salt, and the like, other than ammonium when ammonia is included. Quaternary ammonium ions of the quaternary ammonium salt may be tetramethylammonium, triethylmethylammonium, and tetraethylammonium, etc. The quaternary amidinium salt may be ethyldimethylimidazolinium and tetramethylimidazolinium, etc. The amine salt may be primary amines, secondary amines, and tertiary amines. The primary amine may be methylamine, ethylamine, propylamine, and the like, the secondary amines may be dimethylamine, diethylamine, ethylmethylamine and dibutylamine, and the like, and the tertiary amines may be trimethylamine, triethylamine, tributylamine, ethyldimethylamine, ethyldiisopropylamine, and the like.

Furthermore, other additives may be added to the liquid. The additives may be complex compounds of boric acid and polysaccharides (mannit, sorbit, etc.), complex compounds of boric acid and polyhydric alcohol, borate esters, nitro compounds (o-nitrobenzoic acid, m-nitrobenzoic acid, p-nitrobenzoic acid, o-nitrophenol, m-nitrophenol, p-nitrophenol, p-nitrobenzylalcohol etc.), and phosphate esters, etc. These may be used in single or in combination of two or more.

Note that the electrolytic solution may not include ion-dissociative salt that dissociates into anion components and cation components, and the additives, and may be formed only by glycerin, diglycerin, and both, or those and ethylene glycol.

Hereinafter, the electrolytic capacitor of the present disclosure will be described in more detail based on examples. Note that the present disclosure is not limited to the following examples. Electrolytic capacitors of examples 1 and 2 and comparative examples 1 to 9 in which the combinations of the elastomer used in the sealing body and the solvent of the electrolytic solution were different were produced. Other elements of the solid electrolytic capacitors other than the elastomer used in the sealing body and the solvent of the electrolytic solution were common, and the solid electrolytic capacitors were produced as follows.

That is, the anode foil was aluminum foil, and the surface thereof was enlarged by etching and the dielectric oxide film was formed thereon by chemical conversion treatment. The cathode foil was also aluminum foil, and the surface thereof was enlarged by etching and the oxide film was formed thereon by chemical conversion treatment. The same anode foil and cathode foil were used for all electrolytic capacitors, and lead wires were connected to each foil, and the anode foil and cathode foil were wound to face each other via a manila-based separator. The capacitor element was immersed in aqueous solution of ammonium dihydrogen phosphate of the same concentration for 10 minutes to perform restorative conversion.

Next, dispersion of polyethylene dioxythiophene (PEDOT/PSS) doped with polystyrene sulfonic acid of the same product as the conductive polymer was prepared in the same concentration, and the capacitor elements were immersed in the dispersion, pulled up, and was dried at 150 °C for 30 minutes. By this, the solid electrolytes were formed on the capacitor elements.

Ammonium azelate was added to the solvent of the examples and the comparative examples as the ion-dissociative salt. Ammonium azelate was added to the electrolytic solution at a rate of 0.16 mol per 1 kg of the electrolytic solution. The capacitor element on which the solid electrolyte had been formed was immersed in the electrolytic solution to impregnate 150 mg of the electrolytic solution in the capacitor element. Then, the capacitor elements were housed in the aluminum casings with the same dimension and shape.

The sealing body formed only of the elastic body of the elastomer according to the examples and the comparative examples was mounted on the opened end of the aluminum casing, and the opened end was sealed by caulking at the same pressure. However, the lead wire drawn from the capacitor element was drawn from the sealing body so that the capacitor element can be conducted. The size of the solid electrolytic capacitor was 10 mm in diameter, 10 mm in height, and the constant rate was 35 WV and 270 $\mu$F.

In the examples 1 and 2 and the comparative examples 1 to 9, the type of the elastomer used in the sealing body and the type of the solvent of the electrolytic solution were as the below table 1. Note that butyl rubber used as the elastomer was regular butyl. In the comparative example 9, polyethylene glycol with the average molecular weight of 300 was used.

[Table 1]

|  | Type of Sealing Body | Solvent of Electrolytic Solution |
|---|---|---|
| Comparative Example 1 | Ethylene Propylene Rubber | Glycerin |
| Comparative Example 2 | Butyl Rubber | Ethylene Glycol |
| Comparative Example 3 | Butyl Rubber | Diethylene Glycol |
| Comparative Example 4 | Butyl Rubber | Triethylene Glycol |
| Comparative Example 5 | Butyl Rubber | Propylene Glycol |
| Comparative Example 6 | Butyl Rubber | Polyglycerin |
| Comparative Example 7 | Butyl Rubber | Pentanediol |
| Comparative Example 8 | Butyl Rubber | Ethyl Hexanediol |
| Comparative Example 9 | Butyl Rubber | Polyethylene Glycol |
| Example 1 | Butyl Rubber | Glycerin |
| Example 2 | Butyl Rubber | Diglycerin |

The solid electrolytic capacitors of the examples 1 and 2 and the comparative examples 1 to 9 were exposed under high-temperature environment of 170 °C. Then, the capacitance (Cap), the equivalent series resistance (ESR), and the transpiration amount of the electrolytic solution were measured right before the solid electrolytic capacitors were exposed under the high-temperature environment, 1000 hours after the solid electrolytic capacitors were exposed under the high-temperature environment, and 2000 hours after the solid electrolytic capacitors were exposed under the high-temperature environment, and the condition of the sealing body was observed visually.

The measurement results and observation results at each time are shown in the table 2.

[Table 2]

| | Type of Sealing Body | Solvent of Electrolytic Solution | Initial | | 170 ° C, 1000h | | | | 170 ° C, 20000h | | | |
|---|---|---|---|---|---|---|---|---|---|---|---|---|
| | | | Cap (μF) | ESR (Ω) | Cap (μF) | ESR (Ω) | Δ Wt (mg) | Condition of Sealing Body | Cap (μF) | ESR (Ω) | ΔWt (mg) | Condition of Sealing Body |
| Comparative Example 1 | Ethylene Propylene Rubber | Glycerin | 254 | 0.012 | 182 | 0.017 | -73 | No Change | 0 | 312 | -150 | No Chang |
| Comparative Example 2 | Butyl Rubber | Ethylene Glycol | 250 | 0.011 | 240 | 0.014 | -64 | No Change | 0 | 121 | -150 | Cracked |
| Comparative Example 3 | Butyl Rubber | Diethylene Glycol | 256 | 0.012 | 199 | 0.015 | 71 | No Change | 0 | 302 | -150 | Cracked |
| Comparative Example 4 | Butyl Rubber | Triethylene Glycol | 255 | 0.012 | 198 | 0.016 | -62 | No Chance | 0 | 212 | -150 | Cracked |
| Comparative Example 5 | Butyl Rubber | Propylene Glycol | 245 | 0.015 | 190 | 0.021 | -102 | No Change | 0 | 319 | - 150 | Cracked |
| Comparative Example 6 | Butyl Rubber | Polyglycerin | 24) | 0.017 | 179 | 0.024 | -28 | No Change | 0 | 56 | -150 | Cracked |
| Comparative Example 7 | Butyl Rubber Butyl Rubber | Pentanediol | 252 | 0.012 | 158 | 0.017 | -98 | No Change | 0 | 111 | -150 | Cracked |
| Comparative Example 8 | Butyl Rubber | Ethyl Hexanediol | 250 | 0.012 | 171 | 0.019 | -98 | No Change | 0 | 263 | -150 | Cracked |
| Comparative Example 9 | Butyl Rubber | Polyethylene Glycol | 254 | 0.012 | 217 | 0.017 | -45 | No Change | 0 | 96 | -150 | Cracked |
| Example 1 | Butyl Rubber | Glycerin | 254 | 0.012 | 236 | 0.015 | -26 | No Chance | 227 | 0.016 | -54 | No Change |
| Example 2 | Butyl Rubber | Diglycerin | 253 | 0.012 | 214 | 0.016 | -28 | No Change | 208 | 0.018 | -60 | No Change |

As shown in the table 2, after being exposed under the high-temperature environment of 170 °C for 2000 hours, the solid electrolytic capacitor of the comparative example 1 lost all the electrolytic solution and the capacitance became zero. The comparative example 1 included the sealing body formed of ethylene propylene rubber, and this sealing body did not crack. That is, in the sealing body formed of ethylene propylene rubber, all the electrolytic solution permeated the sealing body and transpired outside.

Furthermore, after being exposed under the high-temperature environment of 170 °C for 2000 hours, the solid electrolytic capacitor of the comparative examples 2 to 9 also lost all the electrolytic solution and the capacitance became zero. The comparative examples 2 to 9 included the sealing body formed of butyl rubber, and this sealing body cracked. That is, it was observed that, in the sealing body formed of butyl rubber, all the electrolytic solution transpired outside due to the crack.

On the other hand, even after being exposed under the high-temperature environment of 170 °C for 2000 hours, much electrolytic solution remained in the solid electrolytic capacitor of the examples 1 and 2, and the high capacitance was maintained. These solid electrolytic capacitors of the examples 1 and 2 included the sealing body formed of butyl rubber, like the comparative examples 2 to 9. However, the solid electrolytic capacitors of the examples 1 and 2 used glycerin or diglycerin as the solvent of the electrolytic solution, unlike the comparative examples 2 to 9. As a result, the sealing body of the solid electrolytic capacitors of the examples 1 and 2 did not crack, unlike the comparative examples 2 to 9.

Accordingly, it was observed that, when the sealing body included butyl rubber and the solvent of the electrolytic solution was glycerin or diglycerin, the sealing did not crack and much electrolytic solution remained in the solid electrolytic capacitor because the sealing body had low permeability, maintaining the capacitance and achieving the long lifetime even when exposed under the high-temperature environment of 170 °C.

Next, the solid electrolytic capacitors of the examples 3 to 9 and the comparative example 10 were produced. In the examples 3 to 9 and the comparative example 10, butyl rubber was used for the sealing body and glycerin or diglycerin was used as the solvent of the electrolytic solution. However, in the examples 3 to 9 and the comparative example 10, ethylene glycol was added as the solvent of the electrolytic solution in addition to glycerin or diglycerin, so that the ratio of glycerin or diglycerin in the solvent is different.

In the examples 3 to 9 and the comparative example 10, the solvent of the electrolytic solution and the content of said solvent was as the below table 3.

[Table 3]

| | First Solvent | | Second Solvent | |
|---|---|---|---|---|
| | Type | Content | Type | Content |
| Comparative Example 10 | Glycerin | 50 | Ethylene Glycol | 50 |
| Example 3 | | 60 | | 40 |
| Example 4 | | 70 | | 30 |
| Example 5 | | 80 | | 20 |
| Example 6 | | 90 | | 10 |
| Example 7 | | 97 | | 3 |
| Example 8 | Diglycerin | 60 | | 40 |
| Example 9 | | 97 | | 3 |

The solid electrolytic capacitors of the examples 3 to 9 and the comparative example 10 were exposed under high-temperature environment of 170 °C. Then, the capacitance (Cap), the equivalent series resistance (ESR), and the transpiration amount of the electrolytic solution were measured right before the solid electrolytic capacitors were exposed under the high-temperature environment, 1000 hours after the solid electrolytic capacitors were exposed under the high-temperature environment, and 2000 hours after the solid electrolytic capacitors were exposed under the high-temperature environment, and the condition of the sealing body was observed visually.

The measurement results and observation results at each time are shown in the table 4. In the table, the values in the brackets after the name of the solvent are the percentage of said solvent in the total amount of the solvent.

[Table 4]

| | Solvent and Content of Electrolytic Solution (wt%) | Initial | | 170 ° C, 1000h | | | | 170 ° C, 2000h | | | |
|---|---|---|---|---|---|---|---|---|---|---|---|
| | | Can (μF) | ESR (Ω) | Cap (μF) | ESR (Ω) | ΔWt (mg) | Condition of Sealing Body | Cap (μF) | ESR (Ω) | ΔWt (mg) | Condition of Scalins Body |
| Comparative Example 10 | Glycerin (50) Ethylene Glycol (50) | 256 | 0.011 | 239 | 0.015 | -47 | No Change | 22 | 1.2 | -150 | Cracked |
| Example 3 | Glycerin (60) Ethylene Glycol (40) | 254 | 0.011 | 239 | 0.015 | -42 | No Change | 218 | 0.016 | -84 | No Change |
| Example 4 | Glycerin (70) Ethylene Glycol (30) | 254 | 0.011 | 238 | 0.014 | -36 | No Change | 222 | 0.016 | -68 | No Change |
| Example 5 | Glycerin (80) Ethylene Glycol (20) | 254 | 0.012 | 238 | 0.014 | -33 | No Change | 225 | 0.016 | -61 | No Change |
| Example 6 | Glycerin (90) Ethylene Glycol (10) | 254 | 0.012 | 237 | 0.015 | -29 | No Change | 226 | 0.016 | -57 | No Change |
| Example 7 | Glycerin (97) Ethylene Glycol (3) | 254 | 0.012 | 236 | 0.016 | -27 | No Change | 227 | 0.016 | -56 | No Change |
| Example 8 | Glycerin (60) Ethylene Glycol (40) | 253 | 0.012 | 214 | 0.016 | -48 | No Change | 208 | 0.018 | -90 | No Change |
| Example 9 | Glycerin (97) Ethylene Glycol (3) | 253 | 0.012 | 215 | 0.016 | -30 | No Change | 208 | 0.018 | -64 | No Change |

EP 4 383 295 A1

As shown in the table 4, after being exposed under the high-temperature environment of 170 °C for 2000 hours, in the solid electrolytic capacitor of the comparative example 10, the sealing body cracked, all the electrolytic solution was lost, and the capacitance keenly decrease toward zero. In contrast, after being exposed under the high-temperature environment of 170 °C for 2000 hours, in the solid electrolytic capacitor of the examples 3 to 9, the sealing body did not crack, much electrolytic solution remained, and the capacitance was excellently maintained.

As shown in the table 4, in the solid electrolytic capacitor of the comparative example 10, glycerin was included in the electrolytic capacitor, however, the content of glycerin in the electrolytic solution was 50 wt% relative to the total amount of the solvent. In contrast, in the solid electrolytic capacitors of the example 3 to 9 in which the sealing body did not crack, the content of glycerin or glycerin in the electrolytic solution was 60 wt% or more relative to the total amount of the solvent.

By this, it was observed that, in all examples 1 to 9, when the sealing body included butyl rubber, glycerin, diglycerin, or both were included as the solvent of the electrolytic solution, and the amount of glycerin, diglycerin, or both were 60 wt% or more relative to the total amount of the solvent of the electrolytic solution, the sealing body did not crack, excellent capacitance was maintained, and the solid electrolytic capacitor achieved long life time even when exposed under the high-temperature environment.

Next, the solid electrolytic capacitors of the examples 10 and 11 were produced. In the examples 10 to 11, butyl rubber was used for the sealing body and glycerin or diglycerin was used as the solvent of the electrolytic solution. However, in the examples 10 and 11, γ-butyrolactone or sulfolane was added as the solvent of the electrolytic solution, unlike the examples 4 and 5 in which ethylene glycol was added as the solvent of the electrolytic solution in addition to glycerin or diglycerin.

In the examples 10 and 11, the solvent of the electrolytic solution and the content of said solvent was as the below table 5. In the below table 5, the examples 4 and 5 are also described.

[Table 5]

|  | First Solvent | | Second Solvent | |
| --- | --- | --- | --- | --- |
|  | Type | Content | Type | Content |
| Example 10 | Glycerin | 75 | γ-butyrolactone | 25 |
| Example 11 | | 75 | Sulfolane | 25 |
| Example 4 | | 70 | Ethylene Glycol | 30 |
| Example 5 | | 80 | | 20 |

The solid electrolytic capacitors of the examples 10 and 11 were exposed under high-temperature environment of 170 °C. Then, the capacitance (Cap), the equivalent series resistance (ESR), and the transpiration amount of the electrolytic solution were measured right before the solid electrolytic capacitors were exposed under the high-temperature environment, 1000 hours after the solid electrolytic capacitors were exposed under the high-temperature environment, and 2000 hours after the solid electrolytic capacitors were exposed under the high-temperature environment, and the condition of the sealing body was observed visually.

The measurement results and observation results at each time are shown in the table 6. In the table, the values in the brackets after the name of the solvent are the percentage of said solvent in the total amount of the solvent.

[Table 6]

| | Solvent and Content of Electrolytic Solution (wt%) | Initial | | 170 ° C, 1000h | | | | 170 ° C, 2000h | | | |
|---|---|---|---|---|---|---|---|---|---|---|---|
| | | Cap (μF) | ESR (Ω) | Cap (μF) | ESR (Ω) | ΔWt (mg) | Condition of Sealing Body | Cap (μF) | ESR (Ω) | ΔWt (mg) | Condition of Sealing Body |
| Example 10 | Glycerin (75) γ-butyrolactone (25) | 257 | 0.012 | 129 | 0.016 | -62 | No Change | 216 | 0.017 | -70 | No Change |
| Example 11 | Glycerin (75) Sulfolane (25) | 258 | 0.012 | 238 | 0.016 | -40 | No Change | 222 | 0.017 | -78 | No Change |
| Example 4 | Glycerin (70) Ethylene Glycol (30) | 254 | 0.011 | 238 | 0.014 | -36 | No Change | 222 | 0.016 | -68 | No Change |
| Example 5 | Glycerin (80) Ethylene Glycol (20) | 254 | 0.012 | 238 | 0.014 | -33 | No Change | 225 | 0.016 | -61 | No Change |

As shown in the table 6, after being exposed under the high-temperature environment of 170 °C for 2000 hours, the transpiration amount of the electrolytic solution in the solid electrolytic capacitor of the examples 4 and 5 were lower than that of the examples 10 and 11. In particular, in the example 4, the content of glycerin was lower than that of the examples 10 and 11, and the transpiration amount of the electrolytic solution was small. By this, it was observed that, when ethylene glycol was added to the solvent of the electrolytic solution in addition to glycerin, diglycerin, or both, the transpiration suppression effect of the electrolytic solution became high. Therefore, the content of glycerin and diglycerin can be made small, and the long lifetime of the solid electrolytic capacitor can be further achieved.

Next, the solid electrolytic capacitors of the examples 12 to 18 and the comparative example 11 were produced. In the examples 12 to 18 and the comparative example 11, the solvent and the solute of the electrolytic solution were different. In the examples 12 to 18 and the comparative example 11, the electrolytic capacitor was produced with the same method, same production condition, and same structure as the examples 1 and 2 except that the solvent and the solute of the electrolytic solution were different.

In the solid electrolytic capacitor of the comparative example 11, ethylene glycol was used as the solvent of the electrolytic capacitor, and triethylamine salicylate was added to the electrolytic solution as a solute at a rate of 0.66 mol per 1 kg of the electrolytic solution. In the solid electrolytic capacitors of the examples 12 to 18, glycerin was used as the solvent of the electrolytic solution.

Furthermore, the solute added to the electrolytic solution at a rate of 0.66 mol per 1 kg of the electrolytic solution was triethylamine salicylate in the example 12, triethylamine phthalate in the example 13, triethylamine benzoate in the example 14, triethylamine maleate in the example 15, triethylamine azelate in the example 16, triethylamine adipate in the example 17, and triethylamine 1,6-decanecarboxylate in the example 16.

The reflow process was repeated four times for the solid electrolytic capacitors of the examples 12 to 18 and the comparative example 11, and the height of the solid electrolytic capacitors before and after the four reflow processes was measured and the change was calculated. In the reflow process, the solid electrolytic capacitor was placed in the reflow tank and was heated, and the peak temperature was 260 °C.

The change in the examples 12 to 18 and the comparative example 11 is shown in the below table 7.

[Table 7]

|  | Solvent | Solute | Change after Reflow (4 times) (mm) |
|---|---|---|---|
| Comparative eample 11 | Ethylene Glycol | Triethylamine Salicylate | 0.26 |
| Example 12 | Glycerin | Triethylamine Salicylate | 0.21 |
| Example 13 | Glycerin | Triethylamine Pthalate | 0.08 |
| Example 14 | Glycerin | Triethylamine Benzoate | 0.10 |
| Example 15 | Glycerin | Triethylamine Maleate | 0.21 |
| Example 16 | Glycerin | Triethylamine Azelate | 0.07 |
| Example 17 | Glycerin | Triethylamine Adipate | 0.10 |
| Example 18 | Glycerin | Triethylamine 1,6-decanedicarboxylate | 0.04 |

As shown in the table 7, in the solid electrolytic capacitors of the examples 12 to 18 in which glycerin was used as the solvent of the electrolytic solution, the change was small when compared with the solid electrolytic capacitor of the comparative example 11, and the expansion of the casing after the reflow was suppressed. Furthermore, in the solid electrolytic capacitors of the examples 13, 14, 16, 17 and 18 in which phthalic acid, benzoic acid, azelaic acid, adipic acid, or 1,6-decanedicarboxylic acid were used as the anion components of the electrolytic solution, the expansion of the casing after the reflow was one half or less when compared with the solid electrolytic capacitors of the examples 12 and 15.

Next, the solid electrolytic capacitors of the examples 19 and 20 and the comparative example 12 were produced. In the examples 19 and 20 and the comparative example 12, the solvent and the solute of the electrolytic solution were different. In the examples 19 and 20 and the comparative example 12, the electrolytic capacitor was produced with the same method, same production condition, and same structure as the examples 1 and 2 except that the solvent and the solute of the electrolytic solution were different.

In the solid electrolytic capacitor of the comparative example 12, ethylene glycol was used as the solvent of the electrolytic capacitor, and triethylamine azelate was added to the electrolytic solution as a solute at a rate of 0.66 mol per 1 kg of the electrolytic solution. In the solid electrolytic capacitor of the example 19, 60 wt% of glycerin and 40 wt% of ethylene glycol relative to the total solvent of the electrolytic solution was used, and ammonium azelate was added to the electrolytic solution as a solute at a rate of 0.66 mol per 1 kg of the electrolytic solution. In the solid electrolytic capacitor of the example 19, glycerin was used as the solvent of the electrolytic solution, and ammonium azelate was added to the electrolytic solution as a solute at a rate of 0.66 mol per 1 kg of the electrolytic solution.

The reflow process was repeated four times for the solid electrolytic capacitors of the examples 19 and 20 and the comparative example 12, and the solid electrolytic capacitor of the example 16 in which glycerin was used as the solvent of the electrolytic solution and triethylamine azelate was used as the solute of the electrolytic solution. Then, the equivalent series resistance (ESR) before and after the four reflow processes were measured. In the reflow process, the solid electrolytic capacitor was placed in the reflow tank and was heated, and the peak temperature was 260 °C.

The equivalent series resistance in the examples 16, 19 and 20 and the comparative example 12 is shown in the below table 8. In the table, the values in the brackets after the name of the solvent are the percentage of said solvent in the total amount of the solvent.

[Table 8]

|  | Solvent | Solute | ESR before Reflow (Ω) | ESR after Reflow (Ω) |
|---|---|---|---|---|
| Comparative Example 12 | Ethylene Glycol | Triethylamine Azelate | 0.011 | 2.1 |
| Example 16 | Glycerin | Triethylamine Azelate | 0.011 | 0.72 |
| Example 19 | Glycerin (60) Ethylene Glycol (40) | Ammonium Azelate | 0.011 | 0.028 |
| Example 20 | Glycerin | Ammonium Azelate | 0.011 | 0.025 |

As shown in the table 8, the equivalent series resistance (ESR) after the reflow in the solid electrolytic capacitors of the examples 16, 19 and 20 was smaller than that of the solid electrolytic capacitor of the comparative example 12. By this, it was observed that, when glycerin, diglycerin, or both was used as the solvent and dedoping suppression effect in glycerin and diglycerin the solid electrolyte was used together, both the canceling effect of specific resistance and dedoping suppression effect in glycerin and diglycerin are achieved, and the equivalent series resistance of the solid electrolytic capacitor can be maintained low even when exposed under the high-temperature environment.

As shown in the table 8, the equivalent series resistance (ESR) after the reflow in the solid electrolytic capacitors of the examples 19 and 20 was further smaller than that of the solid electrolytic capacitor of the example 16. By this, it was observed that, when glycerin, diglycerin, or both was used as the solvent and the electrolytic solution included ammonia, it became further difficult for dedoping to occur, and the equivalent series resistance of the solid electrolytic capacitor could be maintained further low even when exposed under the high-temperature environment.

Next, the solid electrolytic capacitors of the examples 21 to 26 were manufactured. In the examples 21 to 26, the electrolytic capacitor was produced with the same method, same production condition, and same structure as the examples 3 except for the elastomer and the rate of glycerin in the solvent of the electrolytic solution.

In the solid electrolytic capacitors of the examples 21 to 26, the elastomer used in the sealing body was the mixture of butyl rubber and ethylene propylene rubber. Unvulcanized butyl rubber and unvulcanized ethylene rubber were mixed according to various mixture ratio defined in the examples 21 to 26, and then the mixture was heated and pressurized using alkyl phenol formaldehyde resin to perform resin vulcanization. By this, butyl rubber and ethylene propylene rubber were cross-linked by resin vulcanization.

Furthermore, in the solid electrolytic capacitors of the examples 21 to 26, the mixture of glycerin and ethylene glycol was used as the solvent of the electrolytic solution. Glycerin was added in various mixture ratio defined in the examples 21 to 26.

In the examples 21 to 26, the weight ratio of each elastomer and the content of each solvent if the electrolytic solution are shown in the below table 9.

[Table 9]

| | Type of Sealing Body | | Solvent of Electrolytic Capacitor | | | |
| | | | First Solvent | | Second Solvent | |
| | Butyl Rubber | Ethylene Propylene Rubber | Type | Content | Type | Content |
|---|---|---|---|---|---|---|
| Example 3 | 100 | 0 | | 60 | | 40 |
| Example 21 | 90 | 10 | | 60 | | 40 |
| Exampele 22 | 70 | 30 | | 60 | | 40 |
| Exampele 23 | 50 | 50 | Glycerin | 60 | Ethylene Glycol | 40 |
| Exampele 24 | 30 | 70 | | 80 | | 20 |
| Exampele 25 | 10 | 90 | | 80 | | 20 |
| Exampele 26 | 10 | 90 | | 100 | | 0 |
| Comparative Example 1 | 0 | 100 | | 100 | | 0 |

In the table 9, the examples 3 in which the elastomer was only butyl rubber and the comparative example 1 in which the elastomer was ethylene propylene rubber was used are also shown. In the examples 21 to 25 and 3 and the comparative example 1, the amount of butyl rubber was different by 10 wt% or 20 wt% from 0 wt% to 100 wt% relative to the total elastomer. In other word, in the examples 21 to 25 and 3 and the comparative example 1, the amount of ethylene propylene rubber was different by 10 wt% or 20 wt% from 100 wt% to 0 wt% relative to the total elastomer.

Furthermore, in the examples 21 to 23 and 3, the content of glycerin was 60 wt% relative to the total solvent. In the examples 24 and 25, the content of glycerin was 60 wt% relative to the total solvent. In the example 26 and the comparative example 1, the solvent was made of only glycerin.

The solid electrolytic capacitors of the examples 21 to 26 were exposed under the high-temperature environment of 170 °C. Then, the capacitance (Cap), the equivalent series resistance (ESR), and the transpiration amount of the electrolytic solution were measured right before the solid electrolytic capacitors were exposed under the high-temperature environment, 1000 hours after the solid electrolytic capacitors were exposed under the high-temperature environment, and 2000 hours after the solid electrolytic capacitors were exposed under the high-temperature environment, and the condition of the sealing body was observed visually.

The measurement results and observation results of the examples 21 to 26 at each time are shown in the table 10 with the example 3 and the comparative example 1.

[Table 10]

| | Type of Sealing Body | | Solvent of Electrolytic Capacitor | | | | Initial | | 170°C, 1000h | | | | 170°C, 2000h | | | |
| | | | First Solvent | | Second Solvent | | | | | | | | | | | |
| | Butyl Rubber | Ethylene Propylene Rubber | Type | Content | Type | Content | Cap (μF) | ESR (Ω) | Cap (μF) | ESR (Ω) | ΔWt (mg) | Condition of Sealing Body | Cap (μF) | ESR (Ω) | ΔWt (mg) | Condition of Sealing Body |
|---|---|---|---|---|---|---|---|---|---|---|---|---|---|---|---|---|
| Example 3 | 100 | 0 | | 60 | | 40 | 254 | 0.011 | 239 | 0.015 | -42 | No Change | 218 | 0.016 | -84 | No Change |
| Example 21 | 90 | 10 | | 60 | | 40 | 254 | 0.011 | 231 | 0.015 | -48 | No Change | 215 | 0.016 | -95 | No Change |
| Exampele 22 | 70 | 30 | | 60 | | 40 | 254 | 0.011 | 226 | 0.015 | -61 | No Change | 209 | 0.016 | -123 | No Change |
| Exampele 23 | 50 | 50 | Glycerin | 60 | Ethylene Glycol | 40 | 254 | 0.011 | 222 | 0.015 | -70 | No Change | 206 | 0.016 | -137 | No Change |
| Exampele 24 | 30 | 70 | | 80 | | 20 | 254 | 0.012 | 229 | 0.015 | -52 | No Change | 213 | 0.016 | -103 | No Change |
| Exampele 25 | 10 | 90 | | 80 | | 20 | 254 | 0.012 | 224 | 0.015 | -65 | No Change | 208 | 0.016 | -125 | No Change |
| Exampele 26 | 10 | 90 | | 100 | | 0 | 254 | 0.012 | 243 | 0.015 | -37 | No Change | 213 | 0.016 | -98 | No Change |
| Comparative Example 1 | 0 | 100 | | 100 | | 0 | 254 | 0.012 | 182 | 0.017 | -73 | No Change | 0 | 312 | -150 | No Change |

As shown in the table 10, after being exposed under the high-temperature environment of 170 °C for 2000 hours, the released amount Δwt (mg) of the electrolytic solution in the solid electrolytic capacitor of the examples 21 and 26 were lower than 150 mg. The impregnation amount of the electrolytic solution in the solid electrolytic capacitor was 150 mg. That is, even after being exposed under the high-temperature environment of 170 °C for 2000 hours, the electrolytic solution remained in the solid electrolytic capacitor of the examples 21 to 26, and the worsening of the capacitance Cap and the equivalent series resistance ESR was suppressed.

By this, it was observed that even when the sealing body included ethylene propylene rubber, if the sealing body included butyl rubber and the electrolytic solution includes glycerin or 60 wt% or more relative to the total solvent, the electrolytic solution remained in the solid electrolytic capacitor and the long lifetime of the solid electrolytic capacitor was achieved.

Furthermore, as shown in the examples 25 and 26, it was observed that, when the content of butyl rubber was 10 wt% or more relative to the total elastomer, the worsening of the capacitance Cap and the equivalent series resistance ESR was suppressed.

Next, the solid electrolytic capacitors of the examples 27 and 28 were produced. In the examples 27 to 28, butyl rubber was used for the sealing body and glycerin or diglycerin was used as the solvent of the electrolytic solution. However, in the examples 27, polyethylene glycol was added as the solvent of the electrolytic solution in addition to glycerin or diglycerin, unlike the example 3 in which ethylene glycol was added as the solvent of the electrolytic solution in addition to glycerin or diglycerin. In the examples 28, polyethylene glycol with the average molecular weight of 300 and ethylene glycol were added as the solvent of the electrolytic solution in addition to glycerin or diglycerin, unlike the example 3.

In the examples 27 and 28, the solvent of the electrolytic solution and the content of said solvent were as the below table 11. In the below table 11, the examples 3 are also described.

[Table 11]

|  | First Solvent | | Second Solvent | | Third Solvent | |
|---|---|---|---|---|---|---|
|  | Type | Content | Type | Content | Type | Content |
| Example 3 | Glycerin | 60 | Ethylene Glycol | 40 | None | |
| Example 27 | | 60 | Polyethylene Glycol | 40 | | |
| Example 28 | | 60 | Polyethylene Glycol | 20 | Ethylene Glycol | 20 |

The solid electrolytic capacitors of the examples 27 and 28 were exposed under high-temperature environment of 170 °C. Then, the capacitance (Cap), the equivalent series resistance (ESR), and the transpiration amount of the electrolytic solution were measured right before the solid electrolytic capacitors were exposed under the high-temperature environment, 1000 hours after the solid electrolytic capacitors were exposed under the high-temperature environment, and 2000 hours after the solid electrolytic capacitors were exposed under the high-temperature environment, and the condition of the sealing body was observed visually.

The measurement results and observation results at each time are shown in the table 12. In the table, the values in the brackets after the name of the solvent are the percentage of said solvent in the total amount of the solvent.

[Table 12]

| | Solvent and Content of Electrolytic Solution (wt%) | Initial | | 170 °C, 1000h | | | | 170 °C, 2000h | | | |
|---|---|---|---|---|---|---|---|---|---|---|---|
| | | Cap ($\mu$F) | ESR ($\Omega$) | Cap ($\mu$F) | ESR ($\Omega$) | $\Delta$Wt (mg) | Condition of Sealing Bodv | Cap ($\mu$F) | ESR ($\Omega$) | $\Delta$Wt (mg) | Condition of Sealing Bodv |
| Example 3 | Glycerin (60) Ethylene Glycol (40) | 254 | 0.011 | 239 | 0.015 | -42 | No Change | 218 | 0.016 | -84 | No Change |
| Example 27 | Glycerin (60) Polyethylene Glycol (40) | 254 | 0.012 | 236 | 0.117 | -31 | No Change | 201 | 0.018 | -87 | No Change |
| Example 28 | Glycerin (60) Polyethylene Glycol (20) Ethylene Glycol (20) | 254 | 0.012 | 236 | 0.016 | -36 | No Change | 208 | 0.017 | -85 | No Change |

As shown in the table 12, after being exposed under the high-temperature environment of 170 °C for 2000 hours, the transpiration amount of the electrolytic solution in the solid electrolytic capacitor of the examples 27 and 28 were lower than that of the example 3. By this, it was observed that, when polyethylene glycol was added to the solvent of the electrolytic solution in addition to glycerin, diglycerin, or both, the transpiration suppression effect of the electrolytic solution became high. Therefore, the content of glycerin and diglycerin can be made small, and the long lifetime of the solid electrolytic capacitor can be further achieved.

Next, the solid electrolytic capacitors of the examples 29 to 32 were manufactured. In the examples 29 to 32, butyl rubber was used for the sealing body and glycerin or diglycerin was used as the solvent of the electrolytic solution. However, in the examples 29 to 32, other solvents were added in addition to glycerin or diglycerin as shown in the below table 13.

[Table 13]

|  | First Solvent | | Second Solvent | | Third Solvent | |
|---|---|---|---|---|---|---|
|  | Type | Content | Type | Content | Type | Content |
| Example 29 | Glycerin | 75 | Ethylene Glycol | 15 | γ-butyrolactone | 10 |
| Example 30 | | 75 | Polyethylene Glycol | 15 | Sulfolane | 10 |
| Example 31 | | 75 | Sulfolane | 15 | γ-butyrolactone | 10 |
| Example 32 | | 75 | Sulfolane | 15 | Polyethylene Glycol | 10 |

The solid electrolytic capacitors of the examples 29 to 32 were exposed under the high-temperature environment of 170 °C. Then, the capacitance (Cap), the equivalent series resistance (ESR), and the transpiration amount of the electrolytic solution were measured right before the solid electrolytic capacitors were exposed under the high-temperature environment, 1000 hours after the solid electrolytic capacitors were exposed under the high-temperature environment, and 2000 hours after the solid electrolytic capacitors were exposed under the high-temperature environment, and the condition of the sealing body was observed visually.

The measurement results and observation results at each time are shown in the table 14. In the table, the values in the brackets after the name of the solvent are the percentage of said solvent in the total amount of the solvent.

[Table 14]

| | Solvent and Content of Electrolytic Solution (wt%) | Initial | | 170 °C, 1000h | | | | 170 °C, 2000h | | | |
|---|---|---|---|---|---|---|---|---|---|---|---|
| | | Cap (μF) | ESR (Ω) | Cap (μF) | ESR (Ω) | ΔWt (mg) | Condition of Sealing Body | Can (μF) | ESR (Ω) | ΔWt (mg) | Condition of Sealing Body |
| Example 29 | Glycerin (75) Ethylene Glycol (15) γ-butyrolactone (10) | 257 | 0.012 | 231 | 0.016 | -48 | No Change | 223 | 0.017 | -78 | No Change |
| Example 30 | Glycerin (75) Ethylene Glycol (15) Sulfolane (10) | 258 | 0.012 | 234 | 0.016 | -36 | No Change | 225 | 0.017 | -70 | No Change |
| Example 31 | Glycerin (75) Sulfolane (15) γ-butyrolactone (10) | 257 | 0.012 | 226 | 0.016 | -52 | No Change | 220 | 0.017 | -74 | No Change |
| Example 32 | Glycerin (75) Sulfolane (15) Polyethylene Glycol (10) | 257 | 0.012 | 232 | 0.016 | 35 | No Change | 224 | 0.017 | -76 | No Change |

As shown in the table 14, in the examples 29 to 32, since glycerin or diglycerin of 60 wt% or more were included in the solvent, even if multiple solvents selected from ethylene glycol, polyethylene glycol, γ - butyrolactone, or sulfolane were added, the electrolytic solution did not completely transpire and the sealing body did not crack. By this, it was observed that, when glycerin or diglycerin of 60 wt% or more were included in the solvent, the transpiration suppression effect of the electrolytic solution can be obtained even if one or more types of other solvent were added.

**Claims**

1.  An electrolytic capacitor comprising:

    a capacitor element having anode foil, cathode foil, electrolytic solution, and a solid electrolyte layer;
    a casing housing the capacitor element therein; and
    a sealing body sealing the casing,
    wherein the sealing body includes butyl rubber, and
    the electrolytic solution includes glycerin, diglycerin, or both of 60 wt% or more relative to the solvent in the electrolytic solution.

2.  The electrolytic capacitor according to claim 1, wherein the sealing body further includes ethylene propylene rubber.

3.  The electrolytic capacitor according to claim 2, wherein a weight ratio of the butyl rubber (A) and the ethylene propylene rubber (B) is expressed by the below Formula 1.

$$(\text{Formula } 1)$$
$$A/(A+B) \times 100 \geqq 10$$

4.  The electrolytic capacitor according to any one of claims 1 to 3, wherein the electrolytic solution further includes ethylene glycol, polyethylene glycol, or both.

5.  The electrolytic capacitor according to any one of claims 1 to 3, wherein the solid electrolyte layer includes a liquid compound with a boiling point of 150 °C or more and a hydroxyl group.

6.  The electrolytic capacitor according to claim 5, wherein the liquid compound is ethylene glycol.

7.  The electrolytic capacitor according to any one of claims 1 to 3, wherein the electrolytic solution includes one selected from a group of 1,6-decanedicarboxylic acid, azelaic acid, adipic acid, phthalic acid, and benzoic acid.

8.  The electrolytic capacitor according to any one of claims 1 to 3, wherein the electrolytic solution includes ammonia.

**INTERNATIONAL SEARCH REPORT**

International application No.

**PCT/JP2022/035412**

| A. | CLASSIFICATION OF SUBJECT MATTER |
|---|---|

*H01G 9/035*(2006.01)i; *H01G 9/028*(2006.01)i; *H01G 9/10*(2006.01)i; *H01G 9/145*(2006.01)i; *H01G 9/15*(2006.01)i
FI: H01G9/035; H01G9/028 G; H01G9/145; H01G9/15; H01G9/10 E

According to International Patent Classification (IPC) or to both national classification and IPC

| B. | FIELDS SEARCHED |
|---|---|

Minimum documentation searched (classification system followed by classification symbols)

H01G9/035; H01G9/028; H01G9/10; H01G9/145; H01G9/15

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | WO 2021/149750 A1 (PANASONIC IP MAN CO LTD) 29 July 2021 (2021-07-29) paragraphs [0018]-[0031], [0039]-[0052], [0055]-[0067], table 1 | 1, 4, 7, 8 |
| Y | paragraphs [0018]-[0031], [0039]-[0052], [0055]-[0067], table 1 | 2, 3, 5, 6 |
| Y | JP 2000-173877 A (RUBYCON CORP) 23 June 2000 (2000-06-23) claims, paragraphs [0030], [0037] | 2, 3, 5, 6 |
| Y | JP 2014-082392 A (TAYCA CORP) 08 May 2014 (2014-05-08) claims, paragraph [0014] | 5, 6 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/035412**

| Patent document<br>cited in search report | | | Publication date<br>(day/month/year) | Patent family member(s) | Publication date<br>(day/month/year) |
|---|---|---|---|---|---|
| WO | 2021/149750 | A1 | 29 July 2021 | (Family: none) | |
| JP | 2000-173877 | A | 23 June 2000 | (Family: none) | |
| JP | 2014-082392 | A | 08 May 2014 | (Family: none) | |

Form PCT/ISA/210 (patent family annex) (January 2015)

**EP 4 383 295 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013094462 A